# EUROPEAN PATENT SPECIFICATION

(11) **EP 2 465 353 B1**
(45) Date of publication and mention of the grant of the patent: **15.07.2015**
(21) Application number: 10194955.0
(22) Date of filing: 14.12.2010
(51) Int. Cl.: A22C 11/12, A22C 11/02

(54) **Clipping machine**
Clipmaschine
Machine de fermeture par clip

(43) Date of publication of application: 20.06.2012
(73) Proprietor: Poly-clip System GmbH & Co. KG, 65795 Hattersheim (DE)
(72) Inventor: Nemec, Josef, 74725 Sudice (CZ); Melchert, Uwe, 60385 Frankfurt (DE)
(74) Representative: Eisenführ Speiser

(56) References cited:
- US-A- 4 023 238
- US-A- 4 417 434
- US-A- 4 619 018
- US-A- 4 955 109
- US-B2- 7 604 531

## Description

The present invention relates to a clipping machine as well as a method for producing sausage-shaped products having a non-circular cross-section according to the preamble of independent claims 1 and 9.

In particular, the present invention relates to a clipping machine for producing sausage-shaped products having a non-circular cross-section, by feeding a filling material into a tubular packing casing in a feeding direction. The clipping machine comprises a filling tube having an axis longitudinally extending parallel to the feeding direction of the filling material as well as between a first and a second end of the filling tube, the first end being coupled to a feeding device for feeding the filling material in the feeding direction along the filling tube, a clipping device positioned downstream the second end of the filling tube and including a first and a second displacer unit each having an upper and a lower displacer element for displacing the filling material in the tubular packing casing for forming a plait-like portion on the tubular packing casing, and a clipping unit for placing at least one closing clip to the plait-like portion for closing the just filled tubular packing casing, and a forming station for forming the cross-section of the casing portion while being filled, positioned downstream the clipping device.

Moreover, the present invention relates to a method for producing sausage-shaped products having a non-circular cross-section, by filling a filling material in a feeding direction into a tubular casing, wherein the method comprises at least the steps of feeding a filling material through a filling tube into a tubular casing and gathering and closing the filled tubular casing by a closing device for forming a separate sausage-shaped product.

In the practice, it is known that, for example in the production of sausage-shaped products, like sausages, a filling material is fed by a filling machine through a filling tube of a clipping machine into a tubular casing material, which is stored on the filling tube and which is closed at its front end, referred to the feeding direction, by a closing clip. The tubular casing material is pulled-off from the filling tube while being filled. After a predetermined volume of filling material is filled into said tubular casing material, a displacement device with a first and a second pair of displacement elements forms a plait-like portion of the tubular casing material and the clipping machine places and closes at least one closing clip at the plait-like portion forming the back end of the sausage shaped product by respective closing tools which are reversibly movable towards the plait-like portion. After that the sausage-shaped product just produced, is separated from the remaining casing material by a knife or the like of a cutting device of the clipping machine and is transferred to a storage device or another machine for the next producing step.

Moreover, it is known to produce sausage-shaped products, in particular sausages, having a non-circular cross-section, like a rectangular cross-section or a cross-section with at least two flattened side surfaces. In order to form a sausage product having a non-circular cross-section, it is known from EP patent 1 797 761 to produce a partially or loosely filled sausage-shaped product in the manner described above, which has an extended plait-like portion free from filling material. After closing the partially filled tubular casing, the sausage-shaped product is guided through a channel formed by two conveyor belts providing a reducing cross-section for equally distributing the filling material in the tubular casing. Subsequently, the sausage-shaped product may be inserted into a rectangular forming box for forming a rectangular cross-section to the sausage-shaped product.

From US patent application 4,023,238, a stuffing machine with a telescopic nozzle is known. The stuffing machine comprises a threaded discharge orifice to which a T-shaped stationary filling tube having a cylindrical tube section with an inlet end and an outlet end, is attached by the inlet end. A telescopic tube cooperates with the filling tube and is arranged in straight line with the cylindrical tube section. The telescopic tube comprises a telescopic section which is slidably mounted on the cylindrical section of the filling tube and sealed by O-ring seals. The telescopic tube further comprises a forward or discharge nozzle section on which tubular casing material is stored. A brake mechanism is arranged in the region of the front end of the nozzle section. During the filling process, the nozzle section projects beyond the brake mechanism. After the filling process has been finished, the nozzle section is retracted to permit the operation of a clipper.

From German laid open document 22 10 054, it is known to form sausage-shaped products having a non-circular cross-section by feeding filling material into a tubular casing forming an endless strand. Said strand is guided to a longitudinally extending conveyor. Above said conveyor, a first roller having a cylindrical shape is arranged in order to flatten the strand. Subsequently, a second roller having a cylindrical shape with two radially extending and oppositely arranged cams divides the flattened strand into portions of the sausage-shaped product without using closure clips, by displacing the filling material in the region of the cams for forming sections free from filling material. A cutting device separates the portions in pairs by cutting the filling material free sections.

In order to form sausage-shaped products of a non-circular cross-section, in the known devices, a filled tubular casing or casing portion is produced and subsequently flattened by conveyor belts or rollers. In these cases, a backflow of filling material occurred. To avoid a damage of the clipping machine by said backflow, at least the second or rear end of the sausage-shaped product may not be closed, or, in case of a closed second end, the tubular casing may only partially be filled, whereby a complex apparatus for forming said partially filled casing is necessary. In the latter case, to form a sausage-shaped product of a predetermined cross-section, a defined portion of filling material has to be fed into a casing of a defined length, which requires a high controlling amount. By departing from the defined portion of filling material, a burst of the casing or a deviation from the predetermined cross-section may occur. Moreover, in case of a change of the product specifications like length or diameter, an expensive modification of the production device is necessary.

Thus, it is an object of the present invention to provide a clipping machine and a method for producing sausage-shaped products having a non-circular cross-section, with which the above mentioned drawbacks can be overcome, in particular with which bursts of casing material can surely be avoided and with which an adaption of the clipping machine to varying product specifications is easily possible.

The aforesaid object with regard to the clipping machine for producing sausage-shaped products having a non-circular cross-section is achieved by the features of claim 1. Advantageous configurations of the clipping machine are described in claims 2 to 8.

The aforesaid object with regard to the method is achieved by the features of claim 9. An advantageous method step is described in claim 10.

According to the present invention, there is provided a clipping machine for producing sausage-shaped products having a non-circular cross-section, by feeding a filling material into a tubular packing casing in a feeding direction. The clipping machine comprises a filling tube having an axis longitudinally extending parallel to the feeding direction of the filling material as well as between a first and a second end of the filling tube, the first end being coupled to a feeding device for feeding the filling material in the feeding direction along the filling tube, a clipping device positioned downstream the second end of the filling tube and including a first and a second displacer unit each having an upper and a lower displacer element for displacing the filling material in the tubular packing casing for forming a plait-like portion on the tubular packing casing, and a clipping unit for placing at least one closing clip to the plait-like portion for closing the just filled tubular packing casing, and a forming station for forming the cross-section of the casing portion while being filled, positioned downstream the clipping device. The inventive clipping machine further comprises a telescopic tube which is arranged on and coaxially aligned to the filling tube, wherein the telescopic tube is adapted to be reversibly movable on the filling tube in and contrary to the feeding direction. By arranging and reversibly moving the telescopic tube in the described manner, the filling material together with the tubular packing casing may directly be fed into the forming station without forming a filled tubular casing portion having a circular cross-section, and thereby avoiding a backflow of filling opposite to the feeding direction.

For enabling the telescopic tube to be moved and for controlling the movement of the telescopic tube, a telescopic tube drive is coupled to the second end of the telescopic tube for reversibly moving the telescopic tube between a first and a second position on the filling tube, wherein, in the first position, the second end of the telescopic tube is aligned to the second end of the filling tube, and wherein, in the second position, the second end being positioned in closed vicinity to the forming station.

In a further advantageous configuration, a casing break device is positioned on the telescopic tube in a region immediately upstream the clipping device, to ensure a controlled and constant pull-off of casing material from the supply of tubular casing material.

In order to avoid filling material from flowing into the space between the telescopic tube and the filling tube, it is further advantageous that a sealing device is arranged between the filling tube and the telescopic tube in the region of the second end of the filling tube.

According to a further aspect of the present invention, the forming station comprises two pairs of rollers perpendicularly aligned to the feeding direction, each having an upper and a lower roller positioned above and below the central axis of the filling tube. The distance between the rollers and their shape force the cross-section of the sausage-shaped product to be produced.

For adapting the clipping machine to varying product specifications, the distance between the upper and the lower rollers is adjustable. By varying the distance between the pairs of rollers while using the same casing material, the ratio between height and width of the cross-section may be altered. Otherwise, by using a casing material of a different diameter, a predetermined ratio between height and width may be maintained.

For forming sausage-shaped products having constant flat surfaces, the rollers have a circular shape. It could also be desirable to produce sausage-shaped products with a non-continuous flat surface, e.g. the surface may include pattern like letters or signs. In this case, the rollers have a non-circular shape or a circular shape including said pattern.

Advantageously, the clipping machine, in particular, the forming station comprises a drive for driving at least one of the rollers of the forming station. Said drive ensures a continuous advance of the filled and formed casing material as well as a constant filling degree.

Moreover, according to the present invention, there is provided a method for producing sausage-shaped products having a non-circular cross-section, by filling a filling material in a feeding direction into a tubular packing casing. The method comprises the steps of feeding a filling material through a filling tube into a tubular packing casing, gathering and closing the filled tubular packing casing by a closing device for forming a separate sausage-shaped packing and reversibly moving a telescopic tube on the filling tube during the production process.

With regard to the inventive method, it has to be noted that the method provides the same advantages as already described in conjunction with the clipping machine according to the present invention.

In the following, further advantages and embodiments of the inventive method and the inventive clipping machine are described in conjunction with the attached drawings. Thereby, the expression "left", "right", "below" and "above" are referred to the drawings in an orientation of the drawings which allows the normal reading of the reference numbers.

In the drawings:
- Fig. 1:: is a schematically view of a clipping machine for producing sausage-shaped products according to the present invention;
- Fig. 2:: is a perspective and schematically view of an embodiment of the telescopic tube according to the present invention; and
- Fig. 3:: is a perspective and schematically view of an embodiment of the forming station according to the present invention.

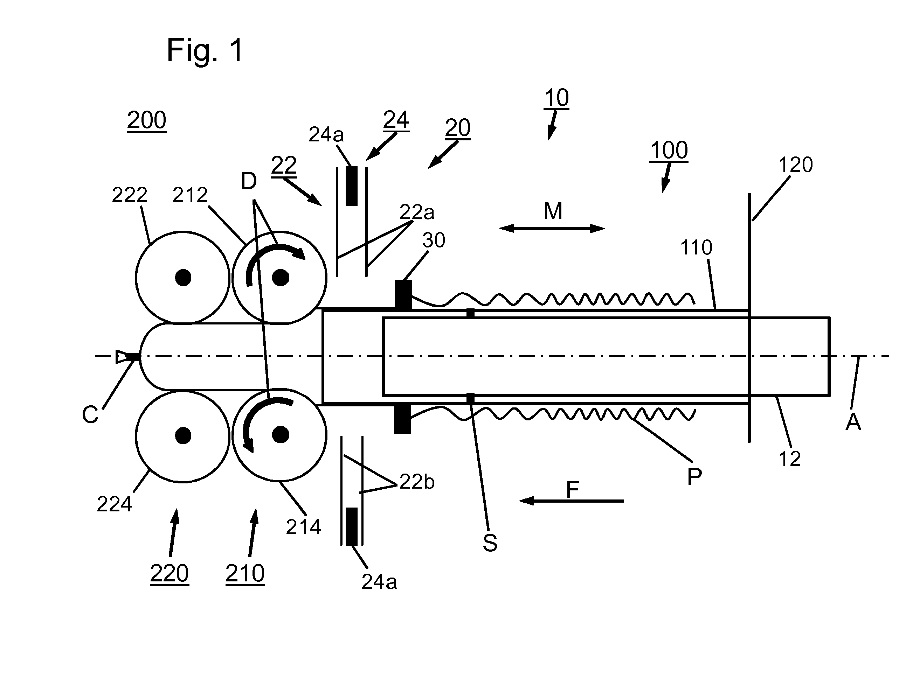

As it can be inferred from Fig. 1, clipping machine 10 according to the present invention includes a horizontally aligned filling tube 12 having a longitudinally central axis A extending parallel to a feeding or filling direction F. Downstream, referred to the feeding direction F, filling tube 12 and immediately in front of its left end, a clipping device 20 is arranged. Clipping device 20 comprises a displacer arrangement 22 for forming a plait-like portion of the tubular packing casing free of filling material having two of pairs upper and lower displacer elements, and a clipping arrangement 24 for attaching and closing a closure clip in order to close an end of a sausage-shaped product having a punch 24a and a die 24b. Both, the upper and lower displacer elements 22a, 22b as well as the punch 24a and the die 24b, are reversibly movable towards the central axis A by respective drive means which are not shown in Frig. 1.

Clipping machine 10 further comprises a telescopic tube 100. Telescopic tube 100 comprises a tube member 110 which is arranged on and coaxially with filling tube 12. The inner diameter of tube member 110 is larger than the outer diameter of filling tube 12. At the rear or second end of tube member 110 of telescopic tube 100, facing away from clipping device 20, a flange 120 is arranged extending in a plane perpendicular to longitudinal dimension of tube member 110 or central axis A of filling tube, respectively. A drive for reversibly moving telescopic tube 100 in a reversibly moving direction M along central axis A of filling tube 12 is coupled to flange 120 and will be described in detail below. Moreover, a sealing member S is positioned between filling tube 12 and tube member 110 of telescopic tube 100 in the region of the left end of filling tube 12. Sealing device S may be fixedly attached to filling tube 12 and seals the annular space between filling tube 12 and tube member 110.

Furthermore, in the region of the front or first end of tube member 110 of telescopic tube 100, which in Fig. 1 is the left end, a casing brake device 30 is mounted on tube member 110. A supply of tubular packing casing P is stored on tube member 110 of telescopic tube 100 between flange 110 and casing brake 30. Casing brake device 30 is only schematically shown in Fig. 1 and may be of a commonly known configuration, e.g. consisting of a first brake ring fixedly positioned on telescopic tube 100 and a second brake ring reversibly movable towards the first brake ring for adjusting a braking force acting on the tubular casing material P when pulled off from telescopic tube 100.

A forming station 200 is positioned downstream, referred to the feeding direction F, clipping device 20. Forming station 200, according to Fig. 1, includes a first and a second pair of rollers 210, 220 each has an upper roller 212, 222 and a lower roller 214, 224. In the embodiment of Fig. 1, rollers 212, 214 of first pair of rollers 210 is driven by a drive described in more detail below. Roller 212 is driven clockwise and roller 214 is driven counter-clockwise as indicated by arrows D, in order to support the discharge movement of the tubular casing portion just filled. Alternatively, all rollers 212, 214, 222, 224 may be driven. Rollers 212, 214, 222, 224 are aligned parallel to each other and perpendicular to central axis A of filling tube 12. First and second pair of rollers 210, 220 are arranged horizontally behind each other in the feeding direction F, whereby upper and lower rollers 212, 222, 214, 224 are equally distanced to central axis A. The clearance between upper rollers 212, 222 and lower rollers 214, 224 is smaller than the diameter of the tubular casing material P. Additionally, according to Fig. 1, the clearance between upper rollers 212, 222 and lower rollers 214, 224 is smaller than the diameter of telescopic tube 100. Forming station 200 is positioned in closed vicinity to clipping device 20 in order to realize a distance as minimal as possible between first pair of rollers 210 of forming station 200 and displacer arrangement 22 of clipping device 20.

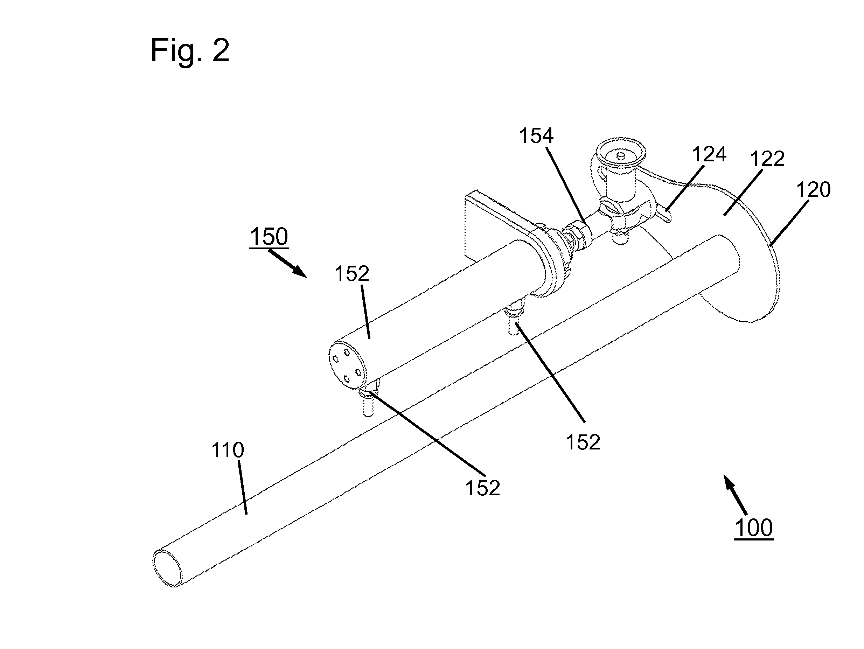

Fig. 2 is a schematically view of telescopic tube 100 according to the present invention. As it can be seen in Fig. 2, flange 120 attached to the rear end of tube member 110 of telescopic tube 100, has an extension in the form of a lug 122 including an elongated hole 124 extending radially from tube member 110. A drive 152 is coupled to lug 122 via a coupling member 154 which, according to the embodiment of Fig. 2, includes a hinge for allowing minor deviations, e.g. in the axial alignment between drive 152 and tube member 110 of telescopic tube 100. Coupling member 154 includes a ratchet lock or the like for detachably coupling drive 152 to lug 122. Thereby, said ratchet lock allows an easy and quick exchange of telescopic tube 100. Drive 152 includes a piston-cylinder assembly arranged parallel to tube member 110 for reversibly moving tube member 110 along central axis A, when positioned at filling tube 12, as described in detail below. Drive 152 may be a hydraulic or pneumatic drive, and includes respective fluid ports 152a, 152b for connecting drive 152 to a fluid source not shown. Tube member 110 and flange 120 may be molded as one peace, and may be made of a suitable material, like plastic or metal. Alternatively, tube member 110 and flange 120 may also be formed as separate parts and, according to the material used, mounted together by gluing, soldering or welding.

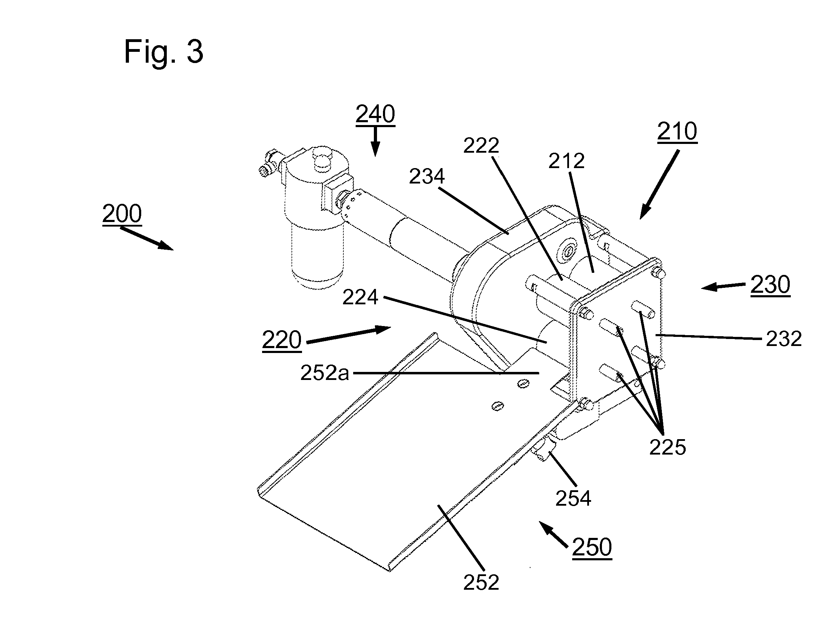

Fig. 3 is a schematically view of forming station 200 including a first and a second pair of rollers 210, 220 each has an upper roller 212, 222 and a lower roller 214, 224, whereby lower roller 214 of first pair of rollers 210 is not visible in Fig. 3. As it further can be seen in Fig. 3, forming station 200 has a framework 230 which comprises a front wall 232 and a rear wall 234, between which rollers 212, 214, 222, 224 are mounted on respective shafts 225 extending horizontally between and passing through walls 232, 234. Rear wall 234 is formed by a gear box accommodating a number of gearwheels for the coordination the speed and moving direction of rollers 212, 214, 222, 224. Alternatively, rollers 212, 214, 222, 224 may alos coupled to each other by drive belts. A drive 240 is coupled to gearbox 234 for driving 212, 214, 222, 224. Drive 240 may also constituted by a pneumatic or hydraulic drive means, like a pneumatic motor. Additionally, forming station 200 includes a discharge device in the form of a chute 250 arranged downstream rollers 212, 214, 222, 224, for discharging the sausage-shaped products from clipping machine 10 when leaving forming station 200. Discharge device or chute 250 includes a chute member 252 which is attached to framework 230 by a coupling assembly 254. Chute member 252 is of a substantially rectangular shape. A tab 252a having a width corresponding to the length of the rollers 212, 214, 222, 224, projects from the upstream directed edge of chute member 252 into the space between wall members 232, 234 towards roller 224. Chute member 252 is horizontally aligned in a direction perpendicular to central axis A, and is bent down in feeding direction F, thereby compassing an angle between chute member 252 and a horizontal plane through central axis A. This angle may be manually adjusted by coupling assembly 254, from which in Fig. 3 only the handle is visible.

In operation, at the beginning of a filling cycle, tubular packing casing material P stored on tube member 110 of telescopic tube 100 is closed at its front end by a closing clip C set and closed by clipping arrangement 24 in the previous cycle. Telescopic tube 100 is in a first position, in which tube member 110 is retracted so that its front or first end coincides with the front end of filling tube 12. In this first position, tube member 110 of telescopic tube 100 does not reach into clipping device 20.

Immediately before starting feeding filling material into tubular packing casing P, tube member 110 is moved into its second position, as it is shown in Fig. 1. In this second position, clipping device 20 is in its open position, wherein upper and lower displacer elements 22a, 22b as well as punch 24a and die 24b are moved away from each other and the front or first end of tube member 110 is in closed vicinity to first pair of rollers 210 of forming station 200. Thereby, tube member 110 engages the space between upper and lower displacer elements 22a, 22b as well as punch 24a and die 24b.

With tube member 110 in its second position, the feeding of filling material into tubular packing casing P starts. The portion of the casing material P just filled is urged into the space between the upper and lower rollers 212, 222, 214, 224 of forming station 200 by the feeding pressure. Forming station 200 thereby provides a substantially rectangular shape to the just filled casing portion, corresponding to the shape of the clearance between upper and lower rollers 212, 222, 214, 224 and wall members 232, 234.

In order to maintain the substantially rectangular cross-section of the sausage-shaped product just produced, rollers 212, 222, 214, 224 are driven with a speed corresponding to the flow speed of the filling material when fed into tubular casing material P.

After a predetermined portion of filling material is fed into casing material P, or filled casing material P has reached a predetermined length, respectively, tube member 110 is retracted into its first position. Clipping device 20, in the generally known manner, gathers the filled casing material P, forms a plait-like portion thereto and applies two closing clips C to the plait-like portion, a first for closing the just filled casing portion and a second for closing the front end of the tubular casing material P remaining on tube member 110. A cutting device cuts the plait-like portion between the first and second closing clips C for separating the sausage-shaped product just produced. The sausage-shaped product just produced is discharged from forming station 200 by driven rollers 212, 222, 214, 224 and by chute 250. Tube member 110 of telescopic tube 100 is in its first position and the next filling cycle may be started as described above.

Since tube member 110 of telescopic tube 100 during feeding of filling material into tubular casing material P is in its second position, wherein its front or first end is in closed vicinity to first par of rollers 210, the filled casing material P is directly urged into a non-circular shape or cross-section. Thereby, no additional filling material is filled into casing material P which would have to be removed by forming said non-circular shape.

It has to be understood, that clipping machine 10, even if not described, comprises a respective control unit to which the components of clipping machine 10 are coupled for being adjusted and coordinated. According to the size and/or the kind of sausage-shaped products, like sausages, to be produced, the control unit may select the speed and the duration of the movement of telescopic tube 100 and/or rollers 212, 214, 222, 224 of forming station 200.

As described in conjunction with Fig. 1, casing brake device 30 is mounted on tube member 110 of telescopic tube 100. While reversibly moving tube member 110 between its first and second position, casing brake device 30 positional aligned to tube member 110 is moved accordingly. Alternatively, casing brake device 30 may be fixed in position relative to filling tube 12. In this configuration, tube member 110 of telescopic tube 100 slides through casing brake device 30, when moved between its first and second position.

Drives 150 and 240 have been described as being fluid drives, like pneumatic or hydraulic drives. Naturally, also other drive means may be utilized, like electric motors or the like. Alternatively, only one drive may be used for driving both, telescopic tube 100 and forming station 200. In this case, a respective coupling between telescopic tube 100 and forming station 200 is necessary.

Rollers 212, 214, 222, 224 have been described as being of a cylindrical shape for forming a sausage-shaped product of a substantially rectangular cross-section. In order to form sausage-shaped products of an other than a rectangular shape, rollers 212, 222, 214, 224 may have a non-cylindrical shape, like a cone, a double-cone, a prism, or their surface may comprise pattern to be applied to the surface of the sausage-shaped products. Depending on the kind of filling material and/or the casing material, rollers 212, 214, 222, 224 may be made of a plastic material or a suitable metal.

In Fig. 3, upper and lower rollers 212, 222, 214, 224 are in a fixed position to each other. Naturally, rollers 212, 222, 214, 224 may also be adjustable attached to wall elements 232, 234, e.g. by vertically aligned elongated holes in which shafts 225 are mounted. In this constitution, the clearance between upper and lower rollers 212, 222, 214, 224 may be adapted to the size of sausage-shaped products to be produced.

Forming station 200 comprises two pairs of rollers 210, 220. Alternatively, a forming station according to the present invention may also include only one pair of upper and lower rollers, e.g. when producing small sausage-shaped products. On the other hand, also more than two pairs of upper and lower rollers may be provided, e.g. when producing large sausage-shaped products.

## Claims

1. A clipping machine for producing sausage-shaped products having a non-circular cross-section, by feeding a filling material into a tubular packing casing (M) in a feeding direction (F), the clipping machine (10) comprises:
- a filling tube (12) having an axis (A) longitudinally extending parallel to the feeding direction (F) of the filling material as well as between a first and a second end of the filling tube (12), the first end being coupled to a feeding device for feeding the filling material in the feeding direction (F) along the filling tube (12),
- a clipping device (20) positioned downstream the second end of the filling tube (12) and including a first and a second displacer unit (22) each having an upper and a lower displacer element (22a, 22b) for displacing the filling material in the tubular packing casing (M) for forming a plait-like portion on the tubular packing casing (M), and a clipping unit (24) for placing at least one closing clip (C) to the plait-like portion for closing the just filled tubular packing casing (M), and
- a forming station (200) for forming the cross-section of the casing portion while being filled, positioned downstream the clipping device (20),
**characterized in that** a telescopic tube (100) is arranged on and coaxially aligned to the filling tube (12), wherein the telescopic tube (100) is adapted to be reversibly movable on the filling tube (12) in and contrary to the feeding direction (F), and wherein
a telescopic tube drive (150) is coupled to the second end of the telescopic tube (100) for reversibly moving the telescopic tube (100) between a first and a second position on the filling tube (12), wherein, in the first position, the second end of the telescopic tube (100) is aligned to the second end of the filling tube (12), and wherein, in the second position, the second end being positioned in closed vicinity to the forming station (200).

2. The clipping machine according to claim 1,
**characterized in that** a casing break device (30) is positioned on the telescopic tube (100) in a region immediately upstream the clipping device (20).

3. The clipping machine according to any of claims 1 to 2,
**characterized in that** a sealing device (S) is arranged between the filling tube (12) and the telescopic tube (100) in the region of the second end of the filling tube (12).

4. The clipping machine according to claim 1,
**characterized in that** the forming station (200) comprises two pairs of rollers (210, 220) perpendicularly aligned to the feeding direction (F), each having an upper and a lower roller (212, 222, 214, 224) positioned above and below the central axis (A) of the filling tube (12).

5. The clipping machine according to claim 4,
**characterized in that** the distance between the upper and the lower rollers (212, 222, 214, 224) is adjustable.

6. The clipping machine according to claim 4 or 5,
**characterized in that** the rollers (212, 214, 222, 224) have a circular shape.

7. The clipping machine according to claims 4 or 5,
**characterized in that** the rollers (212, 214, 222, 224) have a non-circular shape.

8. The clipping machine according to claim 4,
**characterized by** comprising a drive (150) for driving at least one of the rollers (212, 214, 222, 224) of the forming station (200).

9. A method for producing sausage-shaped products having a non-circular cross-section, by filling a filling material in a feeding direction into a tubular packing casing, the method comprises the steps of:
- feeding a filling material through a filling tube (12) into a tubular packing casing (M),
- gathering and closing the filled tubular packing casing (M) by a closing device (20) for forming a separate sausage-shaped packing,
- forming the tubular packing casing (M) into a non-circular cross-section by a forming station (200) while being filled,
**characterized by** reversibly moving a telescopic tube (100) on the filling tube (12) during the production process,
moving the telescopic tube (100) into a first position in which the tubular packing casing (M) will be filled, and
moving the telescopic tube (100) into a second position in which the fiilled tubular packing casing (M) will be gathered and closed by the closing device (20) for forming a separate sausage-shaped packing.

10. The method according to claim 9,
**characterized by** configuring the cross-section of the sausage-shaped product by adjusting the distance between the upper and lower rollers (212, 222, 214, 224) of the forming station (200).

## Patentansprüche

1. Clipmaschine zum Produzieren von wurstförmigen Produkten, welche einen nicht kreisförmigen Querschnitt aufweisen, durch Zuführen eines Füllmateriales in eine rohrförmige Verpackungshülle (M) in eine Zuführrichtung (F), wobei die Clipmaschine (10) enthält:
- ein Füllrohr (12) mit einer Achse (A), welche sich längs sowie parallel zur Zuführrichtung (F) des Füllmateriales sowie zwischen einem ersten und einem zweiten Ende des Füllrohres (12) erstreckt, wobei das erste Ende mit einer Zuführvorrichtung zum Zuführen des Füllmateriales in Zuführrichtung (F) entlang des Füllrohres (12) verbunden ist,
- eine Clipvorrichtung (20), welche stromabwärts hinter dem zweiten Ende des Füllrohres (12) angeordnet ist und welche eine erste sowie eine zweite Verdrängereinheit (22), die jeweils ein oberes und ein unteres Verdrängerelement (22a, 22b) zum Verdrängen des Füllmateriales in der rohrförmigen Verpackungshülle (M) aufweist, um einen zopfförmigen Abschnitt an der rohrförmigen Verpackungshülle (M) zu bilden, und eine Clipeinheit (24) zum Anordnen zumindest eines Verschlussclips (C) an dem zopfförmigen Abschnitt enthält, um die gerade befüllte, rohrförmige Verpackungshülle (M) zu schließen, und
- eine Formstation (200), welche stromabwärts hinter der Clipvorrichtung (20) angeordnet ist, zum Formen des Querschnittes des Hüllenabschnittes, während dieser befüllt wird,
**dadurch gekennzeichnet, dass**
ein teleskopierbares Rohr (100) koaxial zu dem Füllrohr (12) ausgerichtet und darauf angeordnet ist, wobei das teleskopierbare Rohr (100) eingerichtet ist, reversibel auf dem Füllrohr (12) in und entgegen der Zuführrichtung (F) bewegbar zu sein, und wobei
ein Antrieb (150) für das teleskopierbare Rohr mit dem zweiten Ende des teleskopierbaren Rohres (100) verbunden ist, um das teleskopierbare Rohr (100) zwischen einer ersten und einer zweiten Position auf dem Füllrohr (12) reversibel zu bewegen, wobei das zweite Ende des teleskopierbaren Rohres (100) in der ersten Position zu dem zweiten Ende des Füllrohres (12) ausgerichtet ist, und wobei das zweite Ende in der zweiten Position in unmittelbarer Nähe zu der Formstation (200) positioniert ist.

2. Clipmaschine nach Anspruch 1,
**dadurch gekennzeichnet, dass** eine Darmbremsvorrichtung (30) an dem teleskopierbaren Rohr (100) in einem Bereich stromaufwärts der Clipvorrichtung (20) angeordnet ist.

3. Clipmaschine nach einem der Ansprüche 1 bis 2,
**dadurch gekennzeichnet, dass** eine Abdichtvorrichtung (S) zwischen dem Füllrohr (12) und dem teleskopierbaren Rohr (100) in dem Bereich des zweiten Endes des Füllrohres (12) angeordnet ist.

4. Clipmaschine nach Anspruch 1,
**dadurch gekennzeichnet, dass** die Formstation (200) zwei Rollenpaare (210, 220) enthält, welche senkrecht zu der Zuführrichtung (F) ausgerichtet sind, und welche jeweils eine obere und eine untere Rolle (212, 222, 214, 224) aufweisen, die über und unter der Mittelachse (A) des Füllrohres (12) angeordnet sind.

5. Clipmaschine nach Anspruch 4,
**dadurch gekennzeichnet, dass** der Abstand zwischen den oberen und den unteren Rollen (212, 222, 214, 224) einstellbar ist.

6. Clipmaschine nach Anspruch 4 oder 5,
**dadurch gekennzeichnet, dass** die Rollen (212, 214, 222, 224) eine kreisförmige Form aufweisen.

7. Clipmaschine nach Anspruch 4 oder 5,
**dadurch gekennzeichnet, dass** die Rollen (212, 214, 222, 224) eine nicht kreisförmige Form aufweisen.

8. Clipmaschine nach Anspruch 4,
**gekennzeichnet durch** Enthalten eines Antriebes (150) zum Antreiben zumindest einer der Rollen (212, 214, 222, 224) der Formstation (200).

9. Verfahren zum Produzieren von wurstförmigen Produkten, welche einen nicht kreisförmigen Querschnitt aufweisen, durch Befüllen eines Füllmateriales in eine rohrförmige Verpackungshülle in einer Zuführrichtung, wobei das Verfahren die folgenden Schritte enthält:
- Zuführen eines Füllmateriales durch ein Füllrohr (12) in eine rohrförmige Verpackungshülle (M),
- Einschnüren und Verschließen der befüllten, rohrförmigen Verpackungshülle (M) durch eine Schließvorrichtung (20), um eine getrennte wurstförmige Verpackung zu bilden,
- Formen der rohrförmigen Verpackungshülle (M), während diese befüllt wird, in einen nicht kreisförmigen Querschnitt durch eine Formstation (200), **gekennzeichnet durch**
reversibles Bewegen eines teleskopierbaren Rohres (100) auf dem Füllrohr (12) während des Produktionsprozesses,
Bewegen des teleskopierbaren Rohres (100) in eine erste Position, in welcher die rohrförmige Verpackungshülle (M) befüllt werden wird, und Bewegen des teleskopierbaren Rohres (100) in eine zweite Position, in welcher die befüllte, rohrförmige Verpackungshülle (M) **durch** die Schließvorrichtung (20) eingeschnürt und geschlossen werden wird, um eine getrennte wurstförmige Verpackung zu bilden.

10. Verfahren nach Anspruch 9,
**gekennzeichnet durch** Formen des Querschnittes des wurstförmigen Produktes **durch** Einstellen des Abstandes zwischen den oberen und unteren Rollen (212, 222, 214, 224) der Formstation (200).

## Revendications

1. Machine d'agrafage pour produire des produits en forme de saucisse de section transversale non-circulaire, en embossant une matière à embosser dans une enveloppe (M) tubulaire de conditionnement suivant un sens (F) d'alimentation, la machine (10) d'agrafage comprenant:
- un tube (12) d'embossage ayant un axe (A) s'étendant longitudinalement parallèlement au sens (F) d'alimentation de la matière à embosser ainsi qu'entre une première et une seconde extrémités du tube (12) d'embossage, la première extrémité étant reliée à un dispositif d'alimentation pour envoyer la matière à embosser dans le sens (F) d'alimentation dans le tube (12) d'embossage,
- un dispositif (20) d'agrafage placé en aval de la seconde extrémité du tube (12) d'embossage et comprenant une première et une deuxième unités (22) de déplacement ayant chacune un élément (22a) supérieur de déplacement et un élément (22b) inférieur de déplacement pour déplacer la matière à embosser dans l'enveloppe (M) tubulaire de conditionnement pour former une partie analogue à une tresse sur l'enveloppe (M) tubulaire de conditionnement et une unité (24) d'agrafage pour placer au moins une agrafe (C) de fermeture à la partie analogue à une tresse, afin de fermer l'enveloppe (M) tubulaire de conditionnement, qui vient d'être remplie et
- un poste (200) de formation pour former la section transversale de la partie de l'enveloppe, alors qu'elle est remplie, placée en aval du dispositif (20) d'agrafage,
**caractérisée en ce qu'**un tube (100) télescopique est mis sur le tube (12) d'embossage en lui étant aligné coaxialement, le tube (100) étant conçu pour être mobile réversiblement sur le tube (12) d'embossage dans le sens (F) d'alimentation et dans le sens contraire et dans laquelle un entraînement (150) du tube télescopique est relié à la seconde extrémité du tube (100) télescopique pour déplacer réversiblement le tube (100) télescopique entre une première et une deuxième positions sur le tube (12) d'embossage, dans laquelle, dans la première position, la seconde extrémité du tube (100) télescopique est alignée avec la seconde extrémité du tube (12) d'embossage et dans laquelle, dans la deuxième position, la deuxième extrémité est placée à proximité étroite du poste (200) de formation.

2. Machine d'agrafage suivant la revendication 1,
**caractérisée en ce qu'**un dispositif (30) de rupture d'enveloppe est placé sur le tube (100) télescopique dans une région immédiatement en amont du dispositif (20) d'agrafage.

3. Machine d'agrafage suivant l'une quelconque des revendications 1 à 2,
**caractérisée en ce qu'**un dispositif (S) d'étanchéité est entre le tube (12) d'embossage et le tube (100) télescopique dans la région de la seconde extrémité du tube (12) d'embossage.

4. Machine d'agrafage suivant la revendication 1,
**caractérisée en ce que** le poste (200) de formation comprend deux paires de rouleaux (210, 220) alignées perpendiculairement au sens (F) d'alimentation, chacune ayant un rouleau (212, 222) supérieur et un rouleau (214, 224) inférieur placé au-dessus et en dessous de l'axe (A) central du tube (12) d'embossage.

5. Machine d'agrafage suivant la revendication 4,
**caractérisée en ce que** la distance entre les rouleaux (212, 222) supérieurs et les rouleaux (214, 224) inférieurs est réglable.

6. Machine d'agrafage suivant la revendication 4 ou 5,
**caractérisée en ce que** les rouleaux (212, 214, 222, 224) ont une forme circulaire.

7. Machine d'agrafage suivant les revendications 4 ou 5,
**caractérisée en ce que** les rouleaux (212, 214, 222, 224) ont une forme non-circulaire.

8. Machine d'agrafage suivant la revendication 4,
**caractérisée en ce qu'**elle comprend un entraînement (150) pour entraîner au moins l'un des rouleaux (212, 214, 222, 224) du poste (200) de formation.

9. Procédé de production de produits en forme de saucisse de section transversale non-circulaire en embossant une matière à embosser dans un sens d'alimentation dans une enveloppe tubulaire de conditionnement, le procédé comprenant les stades dans lesquels:
- on remplit une enveloppe (M) tubulaire de conditionnement d'une matière à embosser par l'intermédiaire d'un tube (12) d'embossage,
- on réunit et on ferme l'enveloppe (M) tubulaire de conditionnement par un dispositif (20) de fermeture pour former un conditionnement distinct en forme de saucisse,
- on donne à l'enveloppe (M) tubulaire de conditionnement une section transversale non-circulaire, alors qu'on la remplit,
**caractérisé en ce qu'**on déplace réversiblement un tube (100) télescopique sur le tube (12) d'embossage pendant l'opération de production,
on met le tube (100) télescopique dans une première position, dans laquelle l'enveloppe (M) tubulaire de conditionnement sera remplie, et
on met le tube (100) télescopique dans une deuxième position, dans laquelle l'enveloppe (M) tubulaire de conditionnement remplie sera réunie et fermée par le dispositif (20) de fermeture pour former un conditionnement distinct en forme de saucisse.

10. Procédé suivant la revendication 9,
**caractérisé en ce qu'**on configure la section transversale du produit en forme de saucisse en réglant la distance entre les rouleaux (212, 222) supérieurs et les rouleaux (214, 224) inférieurs du poste (200) de formation.
